# EUROPEAN PATENT APPLICATION

(11) **EP 2 889 840 A1**
(43) Date of publication of application: **01.07.2015**
(21) Application number: 13461571.5
(22) Date of filing: 31.12.2013
(51) Int. Cl.: G06T 7/20

(54) **A method for visualising dynamics of motion in a video image**

(71) Applicant: Patents Factory Ltd. Sp. z o.o., 65-043 Zielona Gora (PL)
(72) Inventor: Paczkowski, Jacek, 65-043 Zielona Gora (PL); Kramek, Krzysztof, 65-043 Zielona Gora (PL)
(74) Representative: Pawlowski, Adam

(57) **Abstract**

A method for visualizing motion in a video image, comprising the steps of: consecutively reading (201) source frames of the video image; for each source frame, generating (202) a moving object mask, the moving object mask indicating objects which changed position between the frame and at least one past frame; combining (203) a source frame with at least one moving object mask generated for at least one past source frame (P1, P2) and at least one future frame (F1, F2) to generate a combined frame.

## Description

The present invention relates to visualizing motion in a video image, applicable in particular to video surveillance systems.

In a typical surveillance system, the system operator observes video images from a plurality of video cameras, to detect possible threats to the area under surveillance. Some threats can be detected by analyzing the direction and dynamics (speed and acceleration) of moving objects, such as persons, animals or vehicles. However, precise observation of motion of objects requires a lot of attention and can be tiresome for the operator in case of small objects or a plurality of objects on a plurality of video images.

A European patent EP1287518 presents a sequence represented as a static images of a photographic nature, or by a video sequence in which camera motion remains present, in which case the video sequence can be rendered as a panning camera movement on a stroboscope picture or as an animated stroboscope sequence in which the moving object leaves a trailing trace of copies along its path. This allows tracing only the past movement of the object.

A US patent application US2011/0169867 presents a moving object detecting, tracking, and displaying systems. A graphical user interface may include an alert and tracking window that has a first dimension that corresponds to a temporal domain and a second dimension that corresponds to a spatial domain. In some embodiments, alert and tracking windows include target tracking markers. Such user interface is relatively hard to perceive by the operator of the system and requires training to understand the nature of target tracing markers.

It would be advantageous to provide a method for visualizing motion on a video image which will facilitate observation of moving objects on the video image, in particular for an operator of a video surveillance system.

The object of the invention is a method for visualizing motion in a video image, comprising the steps of: consecutively reading source frames of the video image; for each source frame, generating a moving object mask, the moving object mask indicating objects which changed position between the frame and at least one past frame; combining a source frame with at least one moving object mask generated for at least one past source frame and at least one future frame to generate a combined frame.

Preferably, the moving object mask comprises the contents of the frame corresponding to the moving objects and is blank in other areas.

Preferably, the step of combining comprises decreasing the brightness of the source frame.

Preferably, the step of combining comprises modifying at least one mask for at least one past source frame in a manner different than modifying at least one mask for at least one future frame.

Preferably, the modification is effected by altering the color, hue, saturation, brightness, contrast and/or opacity of the mask.

Preferably, the modification is dependent on the frame position in the sequence of frames.

Preferably, the modification is changed depending on the speed and/or acceleration of the moving object.

The object of the invention is a computer program comprising program code means for performing all the steps of the above-discussed method when said program is run on a computer, as well as a computer readable medium storing computer-executable instructions performing all the steps of the above-described method when executed on a computer.

Another object of the invention is a system for visualizing motion in a video image, the system comprising: a source signal input for receiving a source video signal comprising source video frames, a moving object mask generator connected to the source signal input to generate a moving object mask for each source frame, the moving object mask indicating objects which changed position between the frame and at least one past frame; a series of buffers arranged as a shift register connected to the output of the moving object mask generator, each buffer configured to store a moving object mask, a series of image modifiers connected to the series of buffers for modifying the image of the moving object mask, a delay buffer connected to the source signal input configured to provide a frame delayed by a predetermined number of frames, an image multiplexer connected to the delay buffer and the series of buffers and configured to combine the contents of the source frame from the delay buffer with moving object masks from the series of image modifiers.

The presented method and system allow the observer of the video image to quickly detect the direction and dynamics of motion of objects on the video image. For example, vehicles moving quicker than expected may be quickly identified, which may facilitate detection of e.g. a car bomb attempting to drive in a protected area, such as a military camp. When the operator is able to quickly determine objects moving with dynamics different than average (i.e. slower or faster, quickly accelerating or decelerating), by having the objects visualized in color, the operator can react more quickly to a dangerous situation.

Experiments have shown that the observers of a video image generated according to the presented method and system were able to distinguish and recognize a higher number of moving objects as compared to a standard video image. Moreover, the observers got tired later and their perception remained at a higher level throughout the observation period as compared to a situation when a non-modified image was observed.

The method and system are presented by means of example embodiment on a drawing, in which:
Fig. 1 shows a structure of a system for visualizing motion on a video image;
Fig. 2 shows a method for visualizing motion on a video image;
Fig. 3 shows an exemplary image generated according to the presented concepts.

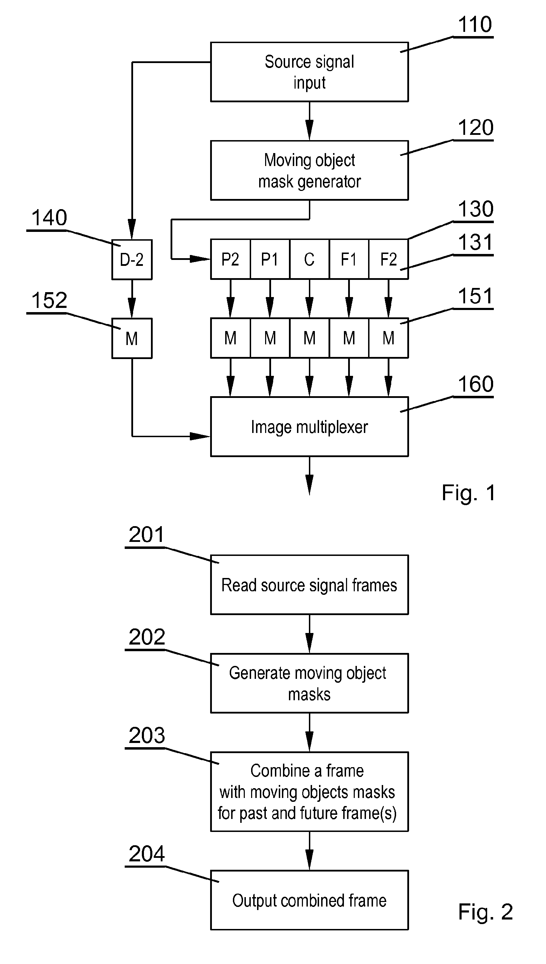

The structure of the system for visualizing motion on a video image is shown in Fig. 1. The system comprises a source video signal input 110, such as a video camera or a pre-recorded signal read from a storage device. Consecutive frames of the source signal are input to a moving object mask generator 120 which compares each frame with at least one frame which is previous (past) in the video sequence and generates a mask indicating moving objects present in the particular frame. Therefore, the mask may comprise the contents of the frame that correspond to the objects which changed their position and blank content outside the moving objects. The generated masks are input to a series of at least three buffers 131 arranged as a shift register 130. Each buffer 131 is configured to store the moving object mask for one frame of the video signal. In the presented embodiment, the shift register 130 stores a series of masks for 5 last frames of the source video signal. The masks stored in buffers 131 are modified, for example by coloring, in image modifiers 151. Next, the masks are combined in an image multiplexer 160 with an image of the frame which is delayed by a delay buffer 140 by at least 1 frame with respect to the current frame of the image and which may be modified by an image modifier 152. The combination may be effected by overlaying the moving object masks on the source frame. For example, the delay buffer 140 may introduce a delay by 2 frames. In consequence, the output frame will be delayed by 2 frames with respect to the current frame of the source signal input and it will be combined with moving object masks of 2 future frames and 2 past frames.

Therefore, the general method for visualizing motion of objects proceeds as shown in Fig. 2. For consecutive frames of a source video signal read in step 201, moving object masks are generated in step 202. In step 203, a frame is combined with moving object masks for at least one past frame P1, P2 and at least one future frame F1, F2. The combined frame is displayed in step 204.

In order to visualize the moving object masks, they may be modified in image modifiers 151, for example by coloring. The modification of masks for past frames can be different than for future frames, in order to visualize the direction of motion. The moving object masks for the future and past frames may be colored each to a different color. In one embodiment, the moving object masks for the future frames may be colored to one color, for example green, and the moving object masks for the past frames may be colored to another color, for example red. The saturation or other parameter of the image, such as hue, brightness, contrast, etc, may be changed progressively as a function of a frame number, for example the saturation may increase toward the future reference, i.e. the masks of the oldest frames may have the smallest saturation while the masks of the most recent frames may have the highest saturation. The masks can be displayed with the same or variable opacity, for example the opacity may increase toward the future reference, i.e. the masks of the oldest frames may have the smallest opacity while the masks of the most recent frames may have the highest opacity. Alternatively, all masks can be displayed with the same opacity, such as 50% (in order to show partially the contents of the background) or 100% (in order to more clearly indicate a moving objects in case the background contents are not necessary to be viewed). Furthermore, the masks for all past frames can be combined to form a single past mask and the masks for all future frames can be combined to form a single future mask.

As an alternative to changing the color of masks, other image parameters may be changed, such as brightness, hue or saturation of the parts of image corresponding the moving object mask. Furthermore, other effects may be applied, such as blinking of the part of the image.

In order for the color masks to be better visible, the other contents of the image may be made more uniform in an image modifier 152. For example, the brightness can be reduced by 50%. Next, in areas corresponding to the future frames mask the green component may be increased by 128 (for 8-bit color values) and in areas corresponding to the past frames mask the red component may be increased by 128. The blue component of the RGB signal can be used e.g. to visualize the moving object mask of the currently displayed frame, in order to display the current position of the moving objects. Such method is particularly effective and provides good visibility of masks at a very low computational cost.

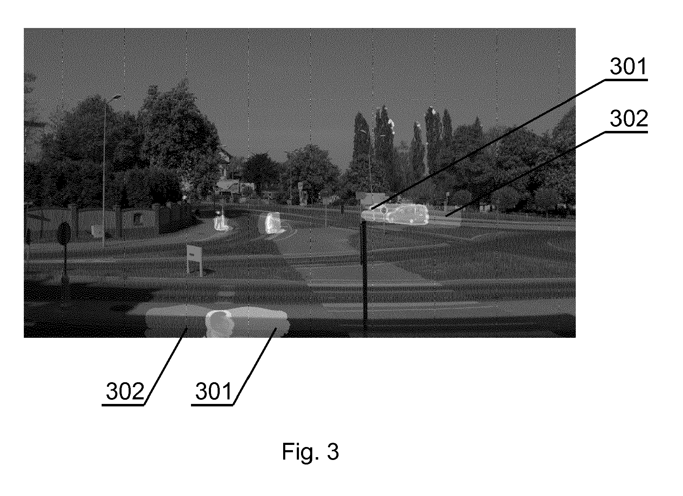

Fig. 3 shows an exemplary picture wherein the future mask is shown in a first color 301, for example green, and the past mask is shown in a second color 302, for example red.

It shall be noted that the size of masks of moving objects depends on several factors, such as the angle of motion with respect to the axis of the camera lens, the distance of the object from the camera, the speed of motion etc. For example, for objects moving along the horizontal axis of the image, objects moving closer to the camera will have "longer" masks than objects moving further away from the camera. The system may take these elements into account the parameters of object motion and position to vary the colors of the masks. For example, for fast moving objects the masks may have higher saturation than for slow moving objects. Information about position of objects may be collected e.g. by using two cameras.

The presented method and system are particularly useful for video surveillance systems, such as security systems or road monitoring systems. It can allow easy detection of persons, animals or vehicles which are moving too fast or which change their speed of motion too fast. It can be also used for monitoring sporting activities, in order to compare motion of different players. Furthermore, it can be used to monitor progress of motion rehabilitation of patients with limited motion capabilities.

It can be easily recognized, by one skilled in the art, that the aforementioned method for visualizing motion in a video image may be performed and/or controlled by one or more computer programs. Such computer programs are typically executed by utilizing the computing resources of an encoder or decoder device. The computer programs can be stored in a non-volatile memory (or otherwise a non-transitory computer storage medium), for example a flash memory or in a volatile memory, for example RAM and are executed by a processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the features of the appended claims is envisaged in the present application.

## Claims

1. A method for visualizing motion in a video image, comprising the steps of:
- consecutively reading (201) source frames of the video image;
- for each source frame, generating (202) a moving object mask, the moving object mask indicating objects which changed position between the frame and at least one past frame;
- combining (203) a source frame with at least one moving object mask generated for at least one past source frame (P1, P2) and at least one future frame (F1, F2) to generate a combined frame.

2. The method according to claim 1, wherein the moving object mask comprises the contents of the frame corresponding to the moving objects and is blank in other areas.

3. The method according to claim 1, wherein the step of combining (203) comprises decreasing the brightness of the source frame.

4. The method according to claim 1, wherein the step of combining (203) comprises modifying at least one mask for at least one past source frame (P1, P2) in a manner different than modifying at least one mask for at least one future frame (F1, F2).

5. The method according to claim 4, wherein the modification is effected by altering the color, hue, saturation, brightness, contrast and/or opacity of the mask.

6. The method according to claim 4, wherein the modification is dependent on the frame position in the sequence of frames.

7. The method according to claim 4, wherein the modification is changed depending on the speed and/or acceleration of the moving object.

8. A computer program comprising program code means for performing all the steps of the method according to any of claims 1-7 when said program is run on a computer.

9. A computer readable medium storing computer-executable instructions performing all the steps of the method according to any of claims 1-7 when executed on a computer.

10. A system for visualizing motion in a video image, the system comprising:
- a source signal input (110) for receiving a source video signal comprising source video frames,
- a moving object mask generator (120) connected to the source signal input to generate a moving object mask for each source frame, the moving object mask indicating objects which changed position between the frame and at least one past frame;
- a series of buffers (131) arranged as a shift register (130) connected to the output of the moving object mask generator (120), each buffer configured to store a moving object mask,
- a series of image modifiers (151) connected to the series of buffers (131) for modifying the image of the moving object mask,
- a delay buffer (140) connected to the source signal input (110) configured to provide a frame delayed by a predetermined number of frames,
- an image multiplexer (160) connected to the delay buffer (140) and the series of buffers (131) and configured to combine the contents of the source frame from the delay buffer (140) with moving object masks from the series of image modifiers (151).

## Amended claims

### Amended claims in accordance with Rule 137(2) EPC.

1. A method for visualizing motion in a video image in real time in a system comprising:
- a source signal input (110) for receiving a source video signal comprising source video frames;
- a moving object mask generator (120) connected to the source signal input;
- a series of buffers (131) arranged as a shift register (130) connected to the output of the moving object mask generator (120), each buffer configured to store a moving object mask;
- a series of image modifiers (151) connected to the series of buffers (131) for modifying the image of the moving object mask;
- a delay buffer (140) connected to the source signal input (110) configured to provide a frame delayed by a predetermined number of frames;
- an image multiplexer (160) connected to the delay buffer (140) and the series of buffers (131);
the method comprising the steps of:
- consecutively reading (201) source frames of the video image from the source signal input (110);
- for each source frame, generating (202) the moving object mask in the moving object mask generator (120), the moving object mask indicating objects which changed position between the frame and at least one past frame;
- in the image multiplexer (160), combining (203) a source frame with at least one moving object mask generated for at least one past source frame (P1, P2) and at least one future frame (F1, F2), read from the buffers (131, 140), to generate a combined frame, by modifying at least one mask for at least one past source frame (P1, P2) in a manner different than modifying at least one mask for at least one future frame (F1, F2), wherein the modification is effected by altering the color, hue, saturation, brightness, contrast and/or opacity of the mask and wherein the modification is dependent on the speed and/or acceleration of the moving object.

2. The method according to claim 1, wherein the moving object mask comprises the contents of the frame corresponding to the moving objects and is blank in other areas.

3. The method according to claim 1, wherein the step of combining (203) comprises decreasing the brightness of the source frame.

4. The method according to claim 1, wherein the modification is dependent on the frame position in the sequence of frames.

5. A computer program comprising program code means for performing all the steps of the method according to any of claims 1-4 when said program is run on a computer.

6. A computer readable medium storing computer-executable instructions performing all the steps of the method according to any of claims 1-4 when executed on a computer.

7. A system for visualizing motion in a video image in a real time, the system comprising:
- a source signal input (110) for receiving a source video signal comprising source video frames,
- a moving object mask generator (120) connected to the source signal input to generate a moving object mask for each source frame, the moving object mask indicating objects which changed position between the frame and at least one past frame;
- a series of buffers (131) arranged as a shift register (130) connected to the output of the moving object mask generator (120), each buffer configured to store a moving object mask,
- a series of image modifiers (151) connected to the series of buffers (131) for modifying the image of the moving object mask,
- a delay buffer (140) connected to the source signal input (110) configured to provide a frame delayed by a predetermined number of frames,
- an image multiplexer (160) connected to the delay buffer (140) and the series of buffers (131) and configured to combine the contents of the source frame from the delay buffer (140) with moving object masks from the series of image modifiers (151) generated for at least one past source frame (P1, P2) and at least one future frame (F1, F2), to generate a combined frame by modifying at least one mask for at least one past source frame (P1, P2) in a manner different than modifying at least one mask for at least one future frame (F1, F2), wherein the modification is effected by altering the color, hue, saturation, brightness, contrast and/or opacity of the mask and wherein the modification is dependent on the speed and/or acceleration of the moving object.
